Europäisches Patentamt

European Patent Office

Office européen des brevets

(19)

(11) Veröffentlichungsnummer: **0 082 426**
A1

(12)
# EUROPÄISCHE PATENTANMELDUNG

(21) Anmeldenummer: **82111413.9**

(22) Anmeldetag: **09.12.82**

(51) Int. Cl.³: **B 60 G 5/04**
**B 60 G 11/10**

(30) Priorität: **23.12.81 DE 3151052**

(43) Veröffentlichungstag der Anmeldung:
**29.06.83 Patentblatt 83/26**

(84) Benannte Vertragsstaaten:
**CH DE FR GB IT LI NL SE**

(71) Anmelder: **Bergische Achsenfabrik Fr. Kotz & Söhne**
**Am Ohlerhammer**
**D-5276 Wiehl 1(DE)**

(72) Erfinder: **Steiner, Helmut**
**Freiherr-vom-Stein-Strasse 1**
**D-5276 Wiehl 1(DE)**

(74) Vertreter: **Patentanwälte Dipl.-Ing. Alex Stenger**
**Dipl.-Ing. Wolfram Watzke Dipl.-Ing. Heinz J. Ring**
**Kaiser-Friedrich-Ring 70**
**D-4000 Düsseldorf 11(DE)**

(54) **Verbundachsaggregat.**

(57) Die Erfindung betrifft ein Verbundachsaggregat mit zwei oder mehr starren Achsen (1, 2) für Anhänger, dessen Achsen über Tragfederpaare (3) vorne und hinten an fahrgestellfesten Konsolen (5,6) und in der Mitte an in fahrgestellfesten Konsolen (7) schwenkbar gelagerten Ausgleichsarmen (8) gleitend abgestützt und mittels Längslenkern (9) geführt sind. Um die Klappergeräusche in den Ausgleichsarmen zu vermeiden wird vorgeschlagen, daß in jedem Ausgleichsarm (8) eine Feder (12) angeordnet ist, welche die in den Ausgleichsarm (8) hineinragenden Enden der Tragfedern (3) unter Vorspannung gegen ihre Gleitstücke (10) drückt. Die Feder (12) ist als Blattfeder ausgebildet und in der Mitte mit dem Ausgleichsarm (8) fest verschraubt.

EP 0 082 426 A1

- 1 -

V e r b u n d a c h s a g g r e g a t

Gegenstand der Erfindung ist ein Verbundachsaggregat mit zwei oder mehr starren Achsen für Anhänger, dessen Achsen über Tragfederpaare in vorne und hinten an fahrgestellfesten Konsolen und in der Mitte an den fahrgestellfesten Konsolen schwenkbar gelagerten Ausgleichsarmen gleitend abgestützt und mittels Längslenkern geführt sind.

Wenn die Enden der Tragfedern einzelner Achsen oder von Verbundachsaggregaten mit zwei oder mehr Achsen gleitend abgestützt und nicht mit angeformten Augen oder dgl. an ihren Abstützungen eingebunden werden, können sie sich im Fahrbetrieb von ihren Gleitstücken abheben und erzeugen beim Zurückschlagen erhebliche Klappergeräusche.

Um diesen Klappergeräuschen, die insbesondere bei Leerfahrten auftreten, zu begegnen, sind schon verschiedene technische Vorschläge bekannt geworden.

Aus dem DE-GM 73 13 196 ist es bekannt, jeder Tragfeder eine Spreizfeder zuzuordnen, die zusammen mit der Tragfeder an der Achse eingespannt ist und deren Enden gegen Auflagen in den Konsolen bzw. bei Verbundachsaggregaten in deren Ausgleichsarmen drücken, um ein Abheben der Enden der Tragfedern von ihren Gleitstücken zu verhindern. Die bekannten Spreizfedern zum Verhindern bzw. Dämpfen der Klappergeräusche sind sehr aufwendig, weil jeder Tragfeder eine Spreizfeder zugeordnet ist, die außerdem auch noch mindestens die gleiche Länge haben muß wie die Tragfeder selbst.

Zur Verminderung des Aufwandes für die Geräuschdämpfung ist es aus der GB-PS 12 44 843 bekannt, unter den Enden der Tragfedern in den vorderen und hinteren Konsolen sowie im Ausgleichsarm Gummipuffer anzuordnen. Diese weniger aufwendige Ersatzlösung arbeitet bei Verbundachsaggregaten aber nur in den festen Konsolen zufriedenstellend, weil dort die Relativbewegungen zwischen den Enden der Tragfedern und ihren Gleitstücken bzw. den Gummipuffern verhältnismäßig klein sind. In den Ausgleichsarmen dagegen werden die Gummipuffer bei starken Ausschlägen sehr schnell zerquetscht und dadurch funktionsunfähig.

Schließlich ist es aus der US-PS 27 36 571 in Verbindung mit als Blattfederpaket ausgebildeten Tragfedern bekannt, die verlängerten Enden der oberen Blattfederlage nach unten und innen umzubiegen und in den fahrgestellfesten Konsolen bzw. einem Ausgleichsarm abzustützen. Diese technische Lösung ist ebenfalls sehr aufwendig, weil die verlängerten Enden der oberen Blattfederlage entsprechend ausgewalzt bzw. gebogen werden müssen und hat den Nachteil, daß schon nach relativ kurzer Betriebsdauer Brüche an den Blattfederenden auftreten.

- 3 -

Davon ausgehend liegt der Erfindung die   A u f g a b e
zugrunde, für Verbundachsaggregate mit gleitend abgestützten Blattfedern eine einfach konstruierte und
wirksame Geräuschdämpfung zu schaffen.

Zur   L ö s u n g   dieser Aufgabe wird vorgeschlagen,
daß in jedem Ausgleichsarm eine Blattfeder angeordnet
und in der Mitte mit dem Ausgleichsarm verschraubt ist,
welche die in den Ausgleichsarm hineinragenden Enden
der Tragfedern unter Vorspannung gegen ihre Gleitstücke
drückt.

Ein erfindungsgemäß ausgebildetes Verbundachsaggregat
hat gegenüber der bekannten Maßnahme zu Geräuschdämpfung mit zusätzlichen Spreizfedern den Vorteil,
daß beispielsweise bei einem Doppelachsaggregat für
je zwei Tragfedern nur eine zusätzliche Feder in den
Ausgleichsarmen erforderlich ist, die außerdem auch
noch erheblich kürzer als eine Tragfeder sein kann. Im
Vergleich zu der bekannten Lösung mit Gummipuffern besteht der Vorteil darin, daß die zusätzliche Feder in
den Ausgleichsarmen auch bei starken Ausschlägen nicht
mehr zerquetscht werden kann. Im Vergleich zu der bekannten Lösung mit verlängerten und umgebogenen Enden
der als Tragfedern dienenden Blattfedern besteht der
Vorteil in einer erheblichen Reduzierung des Herstellungsaufwandes und einer Verlängerung der Lebensdauer.
Aus der Aufgabe und ihrer Lösung ergibt sich, daß der
Erfindungsgedanke in der Anordnung einer einfach konstruierten und dadurch preiswerten sowie langlebigen
mechanischen Feder in jedem Ausgleichsarm besteht.

Weitere Einzelheiten und Vorteile des Gegenstandes der
Erfindung ergeben sich aus der nachfolgenden Beschrei-

- 4 -

bung der zugehörigen Zeichnungen, in denen ein bevorzugtes Ausführungsbeispiel eines erfindungsgemäß ausgebildeten Verbundachsaggregates schematisch dargestellt worden ist. In den Zeichnungen zeigen:

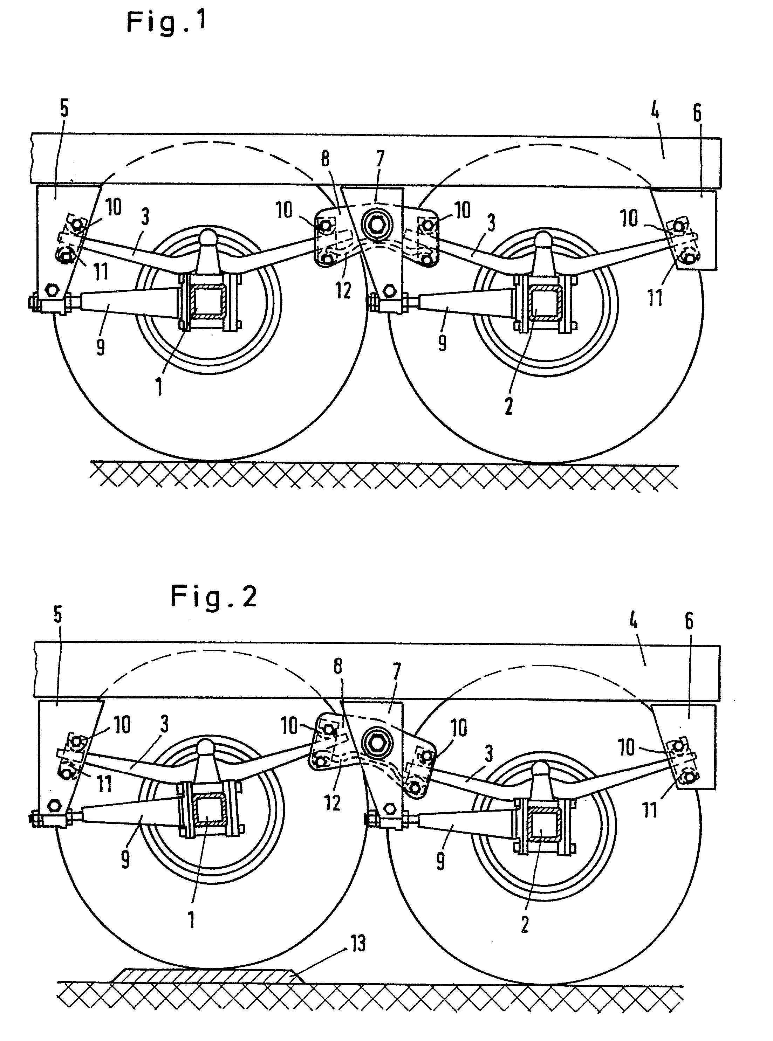

Fig. 1        ein Verbundachsaggregat auf einer ebenen Unterlage von der Innenseite her gesehen;

Fig. 2        dasselbe Verbundachsaggregat auf einer unebenen Unterlage von der Innenseite her gesehen;

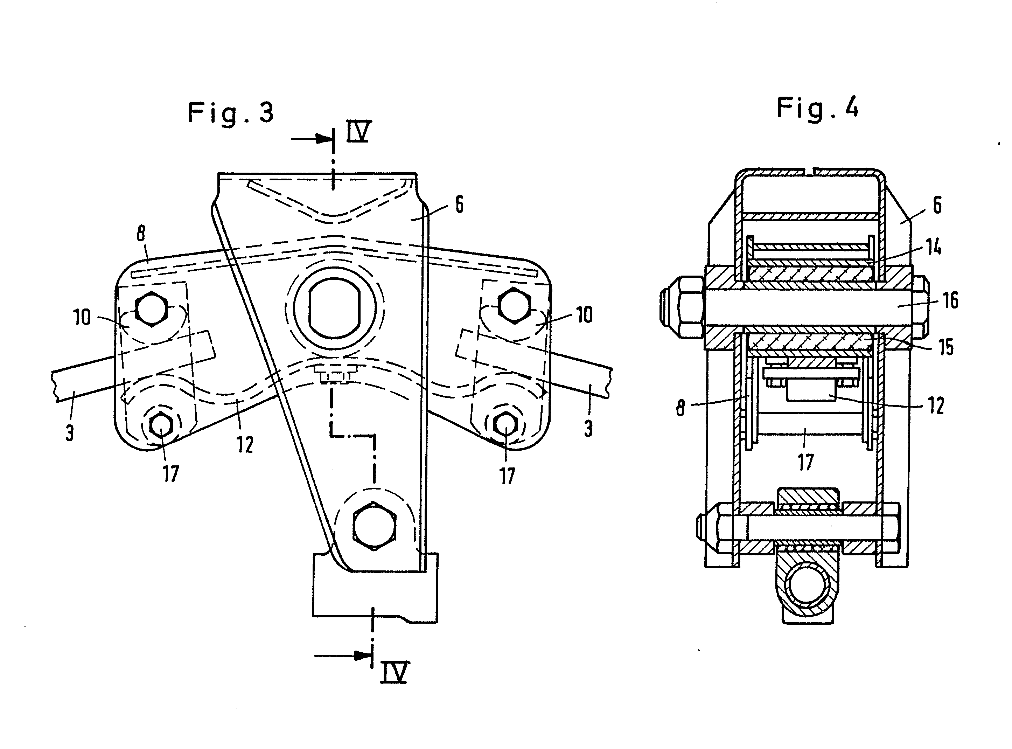

Fig. 3        einen Ausschnitt des Verbundachsaggregates mit einer vergrößerten Darstellung des Ausgleichsarmes und seiner Lagerung;

Fig. 4        den Ausgleichsarm und seine Lagerung entlang der Linie IV-IV in Fig. 3 geschnitten.

Bei dem dargestellten Verbundachsaggregat mit einer vorderen Achse 1 und einer hinteren Achse 2 sind die Achskörper mit als einlagige Parabelfedern ausgebildeten Tragfedern 3 gegen einen Fahrzeugrahmen 4 abgestützt.

Die Abstützung der Tragfedern 3 besteht aus fahrgestellfesten vorderen Konsolen 5 und hinteren Konsolen 6 sowie einer mittleren Konsole 7 mit einem darin schwenkbar gelagerten Ausgleichsarm 8. In Fahrtrichtung nach vorne werden die Achsen 1, 2 durch je zwei Längslenker 9 geführt.

Die Tragfedern 3 sind mit ihren Enden an Gleitstücken 10 in den Konsolen 5, 6 bzw. im Ausgleicharm 8 abgestützt. Unter den Enden der Blattfedern 3 in den fahrgestellfesten Konsolen 5 und 6 sind Gummirollen 11 angeordnet, um das Abheben der Tragfedern 3 von ihren Gleitstücken 10 zu verhindern. In den Ausgleicharmen 8 ist dagegen eine Feder 12 befestigt, deren Enden die Enden der Tragfedern 3 untergreifen und diesen unter Vorspannung anliegen. Dadurch werden die Enden der Tragfedern 3 beispielsweise auch beim Überfahren einer Unebenheit 13, die einen verhältnismäßig großen Schwenkwinkel am Ausgleicharm 8 verursacht, oder bei Leerfahrt ständig gegen ihre Gleitstücke 10 gedrückt, um Klappergeräusche zu verhindern bzw. zu dämpfen.

Die zusätzliche Feder 12 ist im Ausführungsbeispiel an einem äußeren Lagergehäuse 14 eines Gummilagers 15 für eine Schwenkachse 16 des Ausgleicharmes 8 befestigt.

Damit die Achsen 1 und 2 bzw. deren Tragfedern 3 beim Anheben des Fahrzeuges, beispielsweise zum Auswechseln eines Reifens, nicht aus ihrer Aufhängung heraustutschen können, sind unten an den Enden der Tragfedern 3 bzw. der Feder 12 in den Ausgleicharmen 8 Widerlager 17 vorgesehen.

Bezugszeichenliste:

| 1 | Achse |
|----|-------|
| 2 | Achse |
| 3 | Tragfeder |
| 4 | Fahrzeugrahmen |
| 5 | Konsole (vordere) |
| 6 | Konsole (hintere) |
| 7 | Konsole (mittlere) |
| 8 | Ausgleichsarm |
| 9 | Längslenker |
| 10 | Gleitstück |
| 11 | Gummirolle |
| 12 | Feder |
| 13 | Unebenheit |
| 14 | Lagergehäuse |
| 15 | Gummilager |
| 16 | Schwenkachse |
| 17 | Widerlager |

- 7 -

Anspruch

Verbundachsaggregat mit zwei oder mehr starren Achsen (1, 2) für Anhänger, dessen Achsen (1, 2) über Tragfederpaare (3) vorne und hinten an fahrgestellfesten Konsolen (5, 6) und in der Mitte an in fahrgestellfesten Konsolen (7) schwenkbar gelagerten Ausgleichsarmen (8) gleitend abgestützt und mittels Längslenkern (9) geführt sind, dadurch gekennzeichnet, daß in jedem Ausgleichsarm (8) eine Blattfeder (12) angeordnet und in der Mitte mit dem Ausgleichsarm (8) verschraubt ist, welche die in den Ausgleichsarm (8) hineinragenden Enden der Tragfedern (3) unter Vorspannung gegen ihre Gleitstücke (10) drückt.

Fig.1

Fig.2

Fig. 3

Fig. 4

0082426

# 0082426

## EUROPÄISCHER RECHERCHENBERICHT

Nummer der Anmeldung

EP 82 11 1413

### EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| D,Y | GB-A-1 244 843 (LAMBERT)<br>* Seite 3, Zelen 44-60; Figuren 5,7 * | 1 | B 60 G 5/04<br>B 60 G 11/10 |
| | --- | | |
| D,Y | DE-U-7 313 196 (SAUER)<br>* Insgesamt * | 1 | |
| | --- | | |
| Y | US-A-2 954 986 (BOYLES)<br>* Spalte 2, Zeilen 42-47; Figur 4 * | 1 | |
| | --- | | |
| D,A | US-A-2 736 571 (COMPTON)<br>* Spalte 3, Zeilen 32-39; Figur 3 * | 1 | |
| | --- | | |
| A | US-A-1 623 845 (KOGSTROM) | | **RECHERCHIERTE SACHGEBIETE (Int. Cl. ³)** |
| | --- | | |
| A | EP-A-0 001 119 (BERGISCHE ACHSÉNFABRIK) | | B 60 G |
| | ----- | | |

Der vorliegende Recherchenbericht wurde für alle Patentansprüche erstellt.

| Recherchenort<br>DEN HAAG | Abschlußdatum der Recherche<br>25-03-1983 | Prüfer<br>KIESLINGER J |
|---|---|---|